# EUROPEAN PATENT SPECIFICATION

(11) **EP 3 486 875 B1**
(45) Date of publication and mention of the grant of the patent: **29.07.2020**
(21) Application number: 18213858.6
(22) Date of filing: 09.10.2014
(51) Int. Cl.: G06T 19/00

(54) **APPARATUS AND METHOD FOR GENERATING AN AUGMENTED REALITY REPRESENTATION OF AN ACQUIRED IMAGE**
VORRICHTUNG UND VERFAHREN ZUR ERZEUGUNG EINER DARSTELLUNG MIT ERWEITERTER REALITÄT VON EINEM ERFASSTEN BILD
APPAREIL ET PROCÉDÉ PERMETTANT DE GÉNÉRER UNE REPRÉSENTATION DE LA RÉALITÉ AUGMENTÉE D'UNE IMAGE ACQUISE

(43) Date of publication of application: 22.05.2019
(62) Divisional of application: 14188336.3
(73) Proprietor: Huawei Technologies Co., Ltd., Shenzhen, Guangdong 518129 (CN)
(72) Inventor: PEUHKURINEN, Antti Erik, 80992 Munich (DE)
(74) Representative: Körber, Martin Hans

(56) References cited:
- WO-A1-2011/152764
- US-B1- 8 502 835
- Seyed Hesameddin Najafi Shoushtari: "Fast 3D Object Detection and Pose Estimation for Augmented Reality Systems", PhD Dissertation, 2006, XP055193250, Retrieved from the Internet: URL:http://mediatum.ub.tum.de/doc/604471/6 04471.pdf [retrieved on 2015-06-02]
- JAYNES C O ET AL: "BUILDING RECONSTRUCTION FROM OPTICAL AND RANGE IMAGES", PROCEEDINGS OF THE 1997 IEEE COMPUTER SOCIETY CONFERENCE ON COMPUTER VISION AND PATTERN RECOGNITION. SAN JUAN, PUERTO RICO, JUNE 17 - 19, 1997; [PROCEEDINGS OF THE IEEE COMPUTER SOCIETY CONFERENCE ON COMPUTER VISION AND PATTERN RECOGNITION], LOS ALAM, vol. CONF. 16, 17 June 1997 (1997-06-17), pages 380-386, XP000776530, ISBN: 978-0-7803-4236-1
- Bastian Oehler ET AL: "Efficient Multi-resolution Plane Segmentation of 3D Point Clouds" In: "LECTURE NOTES IN COMPUTER SCIENCE", 1 January 2011 (2011-01-01), Springer Berlin Heidelberg, Berlin, Heidelberg, XP055088929, ISSN: 0302-9743 ISBN: 978-3-54-045234-8 vol. 7102, pages 145-156, DOI: 10.1007/978-3-642-25489-5_15, * abstract *
- MIKOLAJCZYK K ET AL: "A Comparison of Affine Region Detectors", INTERNATIONAL JOURNAL OF COMPUTER VISION, KLUWER ACADEMIC PUBLISHERS, BO, vol. 65, no. 1-2, 1 November 2005 (2005-11-01), pages 43-72, XP019216488, ISSN: 1573-1405, DOI: 10.1007/S11263-005-3848-X
- Dirk Holz ET AL: "Real-Time Plane Segmentation Using RGB-D Cameras", Proceedings of 15th RoboCup International Symposium, 1 July 2011 (2011-07-01), pages 1-12, XP055185629, Istanbul Retrieved from the Internet: URL:http://www.ais.uni-bonn.de/papers/robo cup2011_holz.pdf [retrieved on 2015-04-23]
- Claus B ; Madsen ET AL: "Real-Time Image-Based Lighting for Outdoor Augmented Reality under Dynamically Changing Illumination Conditions", Proceedings: International Conference on Graphics Theory and Applications Proceedings: International Conference on Graphics Theory and Applications, 1 January 2006 (2006-01-01), pages 364-371, XP055300591, Retrieved from the Internet: URL:http://vbn.aau.dk/ws/files/4968754/gra pp06.pdf
- HOSHANG KOLIVAND ET AL: "Shadow Generation in Mixed Reality: A Comprehensive Survey", IETE TECHNICAL REVIEW., vol. 32, no. 1, 8 December 2014 (2014-12-08), pages 3-15, XP055584864, XX ISSN: 0256-4602, DOI: 10.1080/02564602.2014.906860
- Pessoa Saulo ET AL: "Illumination Techniques for Photorealistic Rendering in Augmented Reality", Proceedings of the X symposium on virtual and augmented reality (SVR '08); 2008. p. 223-32, 1 January 2008 (2008-01-01), XP055584866, Retrieved from the Internet: URL:https://www.researchgate.net/publicati on/268397492_Illumination_Techniques_for_P hotorealistic_Rendering_in_Augmented_Reali ty [retrieved on 2019-04-30]

## Description

### TECHNICAL FIELD

The present invention relates to the field of augmented reality representation of an acquired image in which the augmented reality representation comprises at least one artificial object.

### BACKGROUND

Current augmented reality applications can be simple systems relying on compass information to obtain information of the surroundings, or the applications may use markers placed on real surfaces to place objects on top of a camera image. Mapping techniques can be used for placing 3D objects on such markers. Research has been done in the area of markerless tracking, where objects are detected via camera sensors. Also, research in the area of reconstructing real world 3D shapes by using camera sensors for obtaining depth information has been made during past years.

A major problem in augmented reality applications is how to place partially visible artificial 3D objects over dead corners of a camera image. It is also a problem how to determine real-life shapes, which are not totally visible in the camera image, but which real-life shapes may be needed to correctly place the artificial 3D objects. Seyed Hesameddin Najafi Shoushtari: "Fast 3D Object Detection and Pose Estimation for Augmented Reality Systems", 2006 describes a method for fast object detection based on fusion of 3D and appearance models.

### SUMMARY

The present invention is defined by the appended independent claims, accordingly it is an object of the present invention to provide an apparatus or system, which enables a user to place artificial 3D objects in an acquired image while taking into account real-life shapes in order to correctly place the artificial objects.

The foregoing and other objects are achieved by the features of the independent claims. Further implementation forms are apparent from the dependent claims, the description and figures.

According to a first aspect, there is provided an apparatus comprising: an image obtaining unit configured to acquire an image; a display for presenting an image; and processing circuitry configured to: determine surfaces occurring in the acquired image; create virtual markers in the acquired image, each virtual marker representing an area of interest in the acquired image; map the virtual markers to the determined surfaces to derive virtually marked surfaces; map the virtually marked surfaces of the acquired image to corresponding virtually marked surfaces of a pre-calculated 3D model to derive a shape scene model; and generate, based on the acquired image and the shape scene model an augmented reality representation of the acquired image, the augmented reality representation comprising at least one artificial object. The apparatus further comprises an orientation unit configured to obtain orientation and location of the apparatus when acquiring an image; and the processing circuitry is further configured to associate the virtual markers in the acquired image with the apparatus's orientation and location when acquiring the image.

For an artificial object being part of an augmented reality representation, one or more parts of the object may be clipped. The clipping can be based on the shape scene model, which may comprise real world surface data acquired from the pre-calculated 3D model. When clipping parts of an artificial object being part of an augmented reality representation, the resulting image may have a realistic look to an end user. Moreover, a more precise placement of the artificial object in the augmented reality presentation can be achieved.

In a first possible implementation form of the apparatus according to the first aspect, the apparatus comprises an orientation unit configured to obtain orientation and location of the apparatus when acquiring an image; and the processing circuitry is configured to generate a depth map of the acquired image and to determine the surfaces in the acquired image based on the depth map, and the apparatus's orientation and location when acquiring the image. The depth map provides the additional advantage that distances between different objects in the acquired images can be determined and that a more precise determination of known objects in the acquired images can be achieved.

In a second possible implementation form of the apparatus according to the first aspect or the first implementation form of the first aspect, then for the creation of the virtual markers in the acquired image, the processing circuitry is configured to: recognize affine regions or areas of interest in the acquired image; track affine regions or areas of interest from multiple images corresponding to the acquired image and being acquired over a time period; group the tracked affine regions or areas on interest; and create virtual markers with information of apparatus's location and orientation for the acquired image based on the obtained grouped affine regions.

By tracking and grouping affine regions or areas of interest from multiple images acquired over a time period, a more robust detection of areas of interest, which can be used for placing of virtual markers, can be performed.

In an third possible implementation form of the apparatus according to the first or to the first and the second implementation form of the first aspect, then for determination of the surfaces in the acquired image, the processing circuitry is configured to: create a point cloud for the acquired image based on the acquired image, the depth map and the orientation and location of the apparatus when acquiring the image; collect point clouds of multiple images corresponding to the acquired image and being acquired over a time period; process the collected point clouds by use of segmentation to obtain a segmented data structure; and reconstruct surfaces with information of apparatus's location and orientation based on the segmented data structure.

In a forth possible implementation form of the apparatus according to the third implementation form of the first aspect, the segmentation is an Octree segmentation process, and the segmented data structure is an Octree data structure.

By using depth maps, point clouds and segmentation, a virtual 3D presentation of surfaces within the acquired image may be obtained. These virtual created 3D surfaces, when mapped with virtual markers, can then be mapped to the real world 3D surfaces with virtual markers provided by the pre-calculated 3D models.

In a fifth possible implementation form of the apparatus according to the first aspect as such or according to any of the preceding implementation forms of the first aspect, the processing circuitry is configured to generate a depth map of the acquired image; and to generate the augmented reality representation based on the acquired image, the generated depth map, and on the derived shape scene model.

In a sixth possible implementation form of the apparatus according to the first aspect as such or according to any of the first, the second, the third, or the forth implementation forms of the first aspect, the processing circuitry is configured to generate a depth map of the acquired image; generate an enhanced depth map for the acquired image based on the generated depth map and the determined surfaces; and to generate the augmented reality representation based on the acquired image, the generated enhanced depth map, and on the derived shape scene model.

By producing an enhanced depth map based on an original depth map and determined or reconstructed surfaces of the acquired image, noise can be removed from the original depth map.

According to second aspect, there is provided a method for generating an augmented reality representation of an acquired image. The method comprises: acquiring an image; determining surfaces occurring in the acquired image; creating virtual markers in the acquired image, each virtual marker representing an area of interest in the acquired image; mapping the virtual markers to the determined surfaces to derive virtually marked surfaces; mapping the virtually marked surfaces of the acquired image to corresponding virtually marked surfaces of a pre-calculated 3D model to derive a shape scene model; generating, based on the acquired image and the shape scene model, an augmented reality representation of the acquired image, the augmented reality representation comprising at least one artificial object; obtaining orientation and location (204) of the apparatus when acquiring an image; and associating the virtual markers in the acquired image with the apparatus's orientation and location when acquiring the image.

### BRIEF DESCRIPTION OF THE DRAWINGS

Fig. 1 is a block diagram illustrating hardware components and processing circuitry configurations of an apparatus according to an embodiment of the invention, where the apparatus is wirelessly connected to an external data services, and where the processing circuitry configurations comprise Operating System Middleware configurations and Shape Detector System configurations;
Fig. 2 is a block diagram of processing circuitry configurations according to an embodiment of the apparatus of Fig. 1, showing different processing circuitry configurations of the Shape Detector System;
Fig. 3 is a block diagram illustrating a Virtual Marker Detector configuration being part of the Shape Detector System configurations according to an embodiment of the invention;
Fig. 4 is a block diagram illustrating a Surface Reconstructor configuration being part of the Shape Detector System configurations according to an embodiment of the invention;
Fig. 5 is a block diagram illustrating a 3D Model Database configuration being part of the Shape Detector System configurations according to an embodiment of the invention;
Fig. 6 is a block diagram illustrating a Virtual Marker Surface Creator configuration being part of the Shape Detector System configurations according to an embodiment of the invention;
Fig. 7 is a block diagram illustrating an Image Depth Enhancer configuration being part of the Shape Detector System configurations according to an embodiment of the invention;
Fig. 8 is a block diagram illustrating a Surface Connector configuration being part of the Shape Detector System configurations according to an embodiment of the invention;
Fig. 9 is a block diagram illustrating a Shape Scene configuration being part of the Shape Detector System configurations according to an embodiment of the invention;
Figs. 10a-10c illustrate creation of virtual markers in an acquired image according to an embodiment of the invention;
Figs. 11a-11d illustrate determination of surfaces occurring in an acquired image according to an embodiment of the invention;
Figs. 12a-12f illustrate derivation of a Shape Scene and generation of an augmented reality representation of an acquired image according to an embodiment of the invention;
Fig. 13 shows an original acquired image;
Fig. 14 shows the original image of fig. 13 with three artificial advertisement objects added to the image;
Fig. 15 shows an augmented reality representation of the image of Fig. 13 according to an embodiment of the invention, the augmented reality representation including two of the artificial objects of Fig. 14;
Fig. 16 shows the augmented reality representation of Fig. 15 including a third artificial advertisement object being created according to an embodiment of the invention; and
Fig. 17 shows a flow diagram of a method for generating an augmented reality representation of an acquired image according to an embodiment of the present invention.

### DETAILED DESCRIPTION OF EMBODIMENTS OF THE PRESENT INVENTION

Embodiments of the present invention provide an apparatus or a computing device system that may be used for generating an augmented reality presentation of one or more acquired images, where artificial 3D objects can be added to real video image feeds or still images acquired from a camera or image obtaining unit, so that a user may see the artificial objects naturally blended to the real image(s). This natural blend of artificial and natural elements in image(s) may enable creation of new user experiences, like new kind of advertisement and user interface possibilities.

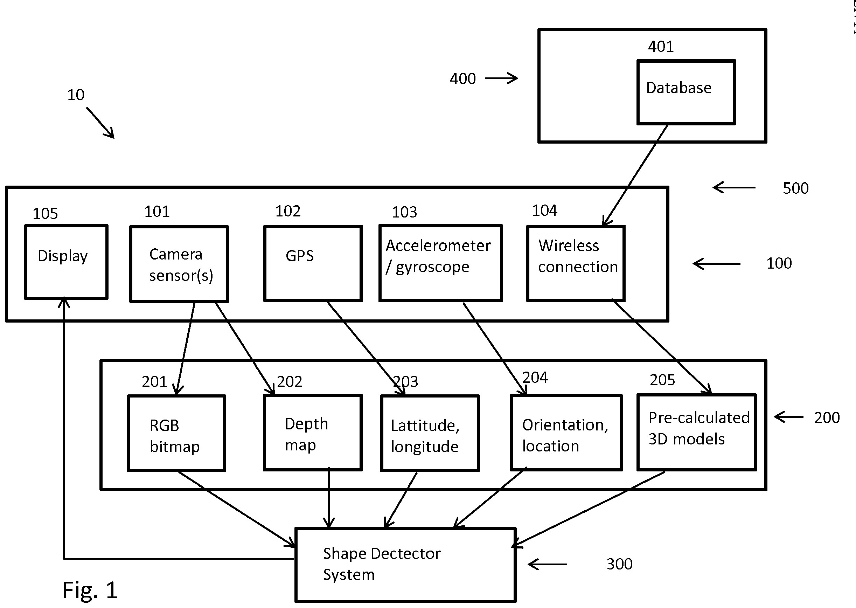

Fig. 1 is a block diagram illustrating hardware components 100 and processing circuitry configurations 200, 300 of an apparatus 10 or system according to an embodiment of the invention. The apparatus 10 may be wirelessly connected to external data services 400, such as via an internet connection 500. The apparatus 10 has a hardware device or component part 100, and a processing circuitry part with one or more processors holding Operating System Middleware configurations 200 and Shape Detector System configurations 300.

The hardware component part 100 of the apparatus 10 may hold one or more camera sensors or image obtaining units 101, a display 105 for presenting images, a geographical position unit, GPS, 102, a device or apparatus orientation unit 103, which may hold an accelerometer and/or gyroscope, and a wireless connection unit 104. The connection unit 104 collects data via the wireless connection 500 from a database 401 hold by the external data services 400.

The Operating System Middleware configurations 200 hold processing configurations for providing RGB bitmaps 201 and depth maps 202 from images acquired via the camera sensor(s) or image obtaining unit(s) 101; for providing data representing the geographical position of the apparatus 10, such as latitude and longitude data 203, based on input from the geographical position unit 102; for providing data representing the apparatus's 10 orientation and/or location 204 based on input from the orientation unit 103; and for providing pre-calculated or pre-processed real world 3D models or image data 205 being received through the wireless connection unit 104 and representing real world 3D images being pre-processed to have recognized surfaces mapped with virtual markers.

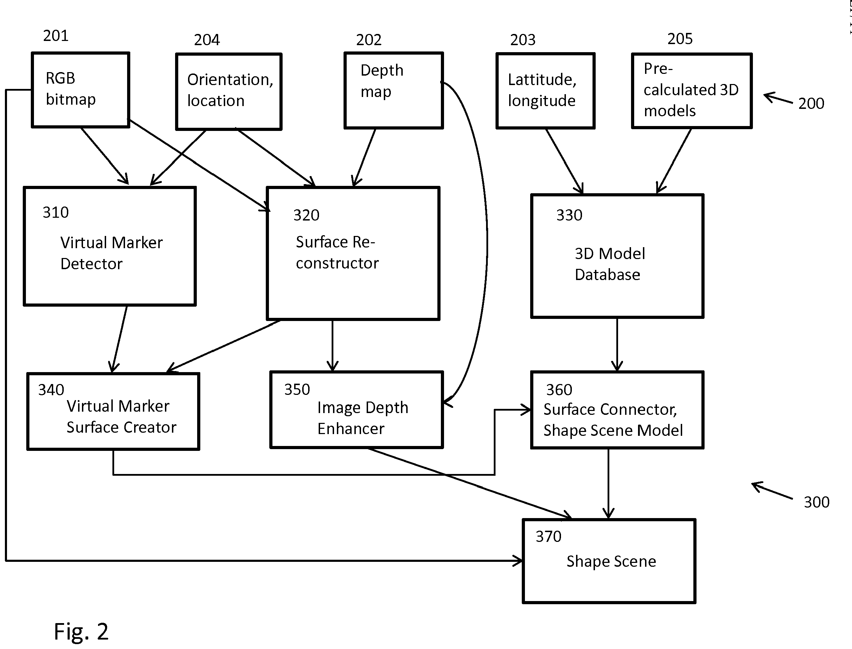

Fig. 2 is a block diagram of the processing circuitry configurations 200, 300 of the apparatus 10 of Fig. 1. The configurations of the Operating System Middleware 200 are the same as discussed in connection with Fig. 1, but Fig. 2 shows a more detailed block diagram of the processing configurations of the Shape Detector System 300, which includes:
A Virtual Marker Detector 310 for detecting points or areas of interest in an acquired image, and for placing virtual markers to the detected points or areas of interest, thereby creating virtual markers in the acquired image. A point of interest may be a point, which can be recognized from an image by well-defined computational methods, and a placed virtual marker may have a location and an orientation in space. The Virtual Marker Detector 310 may operate based on the acquired image or on RGB bitmap data 201 for the image, and may further operate based on data for the apparatus's 10 orientation and location 204 when acquiring the image.

A Surface Reconstructor 320 for determining surfaces occurring in the acquired image. The determined surfaces may be bigger atomic surfaces areas, like planar polygons, cylinder arc, spheres etc. The Surface Reconstructor 320 may operate based on the acquired image or on RGB bitmap data 201 for the image, and may further operate based on depth map data 202 for the image and on data for the apparatus's 10 orientation and location 204 when acquiring the image.

A 3D Model Database 330, which can be a local database with and a cache, which receives and stores pre-calculated 3D models or images 205 being pre-processed to have recognized surfaces mapped with virtual markers. The 3D models being used for further processing may be determined or selected based on the geographical position, such as latitude and longitude 203 of the apparatus 10 when acquiring an image.

A Virtual Marker Surface Creator 340 for mapping or connecting detected points or areas of interest being virtual marked and being output from the Virtual Marker Detector 310 to the reconstructed surfaces being output from the Surface Reconstructor 320, to thereby obtain locally created virtually marked surfaces. The data being output from Surface Creator 340 is similar to or of similar nature as the data representing pre-calculated 3D Models stored in database 330.

An Image Depth Enhancer 350 is an optional component, which may produce enhanced versions of an acquired image from the depth map data 202 by using the reconstructed surface data 320. The Image Depth Enhancer 350 may remove noise or other distracting elements from the depth image of 202.

A Surface Connector 360 for connecting or mapping the locally created virtually marked surfaces from Virtual Marker Surface Creator 340 to corresponding pre-calculated virtually marked surfaces selected from the 3D Model Database 330 to derive a Shape Scene Model for an acquired image. The mapping performed by use of the Surface Connector 360 makes it possible to have the right perspective when inserting an artificial object in an acquired image, since the combination of the locally created marked surfaces and the pre-calculated marked surfaces holds real world information for surfaces seen in the original image obtained from the pre-calculated virtually marked surfaces.

A Shape Scene 370 for combining acquired image data or RGB bitmap data 201 with the mapped surface data with virtual markers being output as a Shape Scene Model from the Surface Connector 360. The Shape Scene 370 may also combine depth map data 202 or enhanced depth map data 350 with acquired image data or RGB bitmap data 201 and the mapped surface data being output from the Surface Connector 360.

The combined data obtained by the Shape Scene 370 may be used for generating an augmented reality representation of an acquired image, where the augmented reality representation comprises one or more artificial objects being inserted in the acquired image. The augmented reality representation of the acquired image may be presented on the display 105.

The combined data obtained by the Shape Scene 370 may also be used for create or determine lighting to the artificial objects. Thus, it is preferred that the processing circuitry configuration 300 is further configured to determine lighting conditions for at least one artificial object comprised in the augmented reality presentation. Here, the processing circuitry may be configured to determine the lighting conditions based on sun light shadow mapping technique and/or ambient occlusion technique.

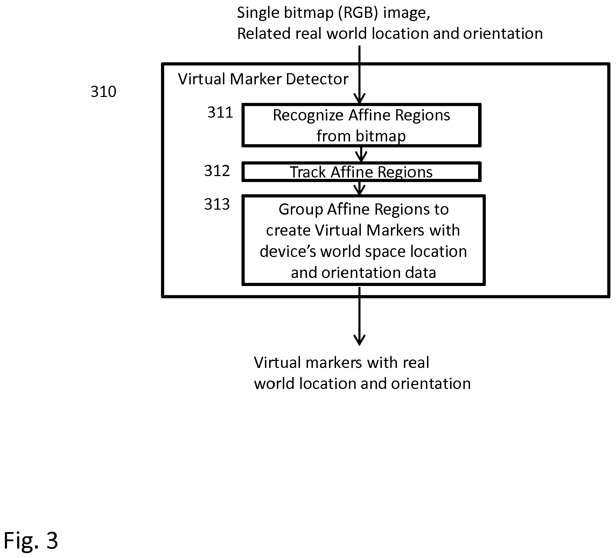

Fig. 3 is a block diagram illustrating a Virtual Marker Detector configuration 310 according to an embodiment of the invention. The Virtual Marker Detector 310 may be configured to recognize affine regions or areas of interest in the acquired image or a RGB bitmap 201 of the image 311; track affine regions or areas of interest from multiple images corresponding to the acquired image and being acquired over a time period 312; and group the tracked affine regions or areas on interest and create virtual markers with information of apparatus's location and orientation for the acquired image based on the obtained grouped affine regions 313. Virtual Marker Detector 310 may detect points of interest from the image data 311, group the points of interests found to create more robust detected areas 312, and place virtual markers to the areas 313. A Virtual marker may have a specific nature which comes from the points or areas of interest. This means that if the same area is found a second time when processing images taken from the same location, most probably a) a virtual marker is placed to the same area and b) it will have similar nature. This feature makes it possible to track specific points on image's real world shapes for example in a video stream.

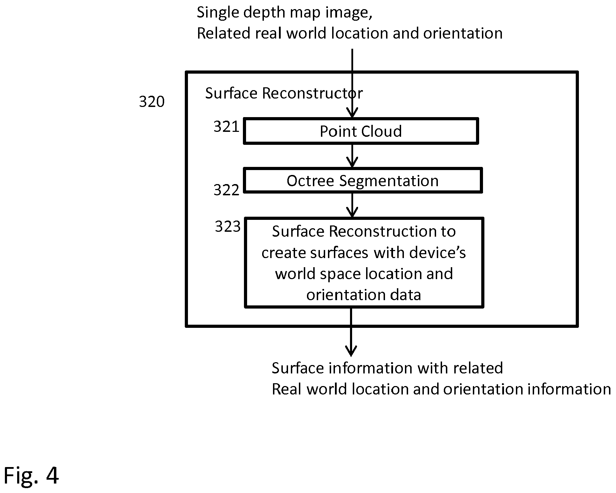

Fig. 4 is a block diagram illustrating a Surface Reconstructor configuration 320 according to an embodiment of the invention. The Surface Reconstructor 320 may be configured to create a point cloud for an acquired image based on the acquired image or a RGB bitmap 201 of the image, the depth map and the orientation and location of the apparatus when acquiring the image, and to collect point clouds of multiple images corresponding to the acquired image and being acquired over a time period 321; process the collected point clouds by use of segmentation to obtain a segmented data structure 322; and reconstruct surfaces with information of apparatus's location and orientation based on the segmented data structure 323. The segmentation 322 may be an Octree segmentation process, and the segmented data structure may be an Octree data structure.

The Surface Reconstructor 320 may create and maintain a point cloud 321 from depth map 202, orientation, location 204 and RGB bitmap data 201.The point cloud may be processed by Octree Segmentation 322. The Octree data structure may be using the same space as the point cloud 321. Octree segmentation may be used to store data from the solid shape information. Surface reconstruction 323 may be made from the octree segmentation 322. Surface reconstruction 323 may find larger atomic surfaces areas, like planar polygons, cylinder arc, sphere etc. based on the octree 322 information. The Surface Reconstructor 320 may also use other data structures that point cloud and octree data structures in the processing.

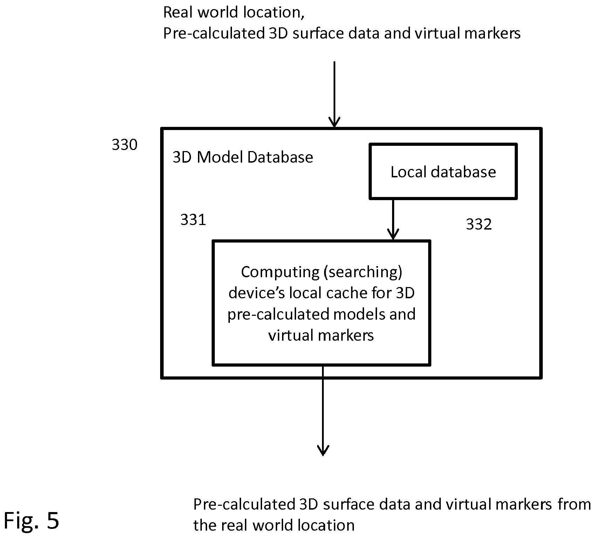

Fig. 5 is a block diagram illustrating a 3D Model Database 330 configuration according to an embodiment of the invention. The 3D Model Database 330 may comprises a local database 332 and a local cache 331, which can receive data related to the apparatus's 10 geographical position or location 203. Pre-calculated 3D model data may be received from external services 400, 401 and may be similar to or of similar nature as the data obtained from the Surface Reconstructor 320. The 3D model data has been pre-processed to have matching surfaces to real world surfaces. The 3D model data with virtual markers may be collected from cache data 331. The 3D model data can be locally stored in the local database 332, which will be faster available for the local cache 331 when compared to the external data services 400. For example local database 332 can have 3D model data from (e.g. all the) common world locations.

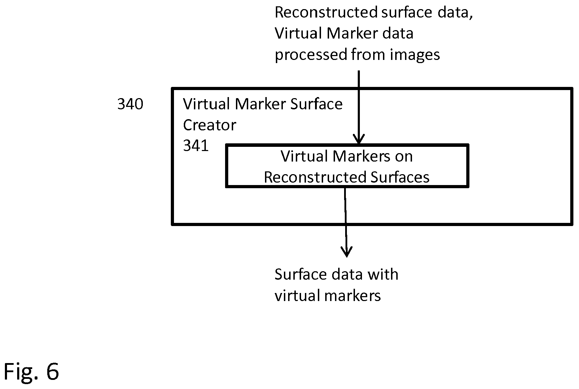

Fig. 6 is a block diagram illustrating a Virtual Marker Surface Creator 340 configuration according to an embodiment of the invention. Virtual Marker Surface Creator 340 connects information from Virtual Marker Detector 310 to the Reconstructed Surfaces 320. The end results 341 are the virtually marked surfaces. The data being output from Surface Creator 340 may be similar to or of similar nature as the data representing pre-calculated 3D Models, which may be stored in database 330, 332 or cache 331.

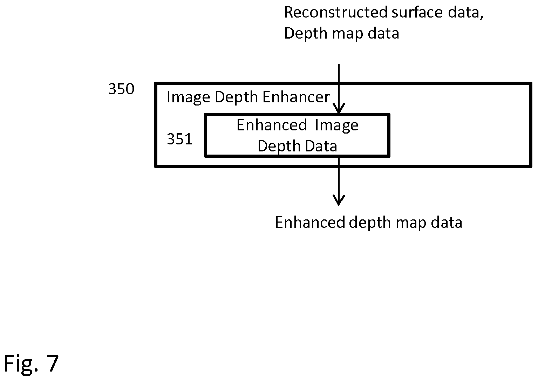

Fig. 7 is a block diagram illustrating the Image Depth Enhancer 350 configuration according to an embodiment of the invention. The Image Depth Enhancer 350 is an optional component, which can produce enhanced versions from the depth map data 202 by using the reconstructed surface data 323.

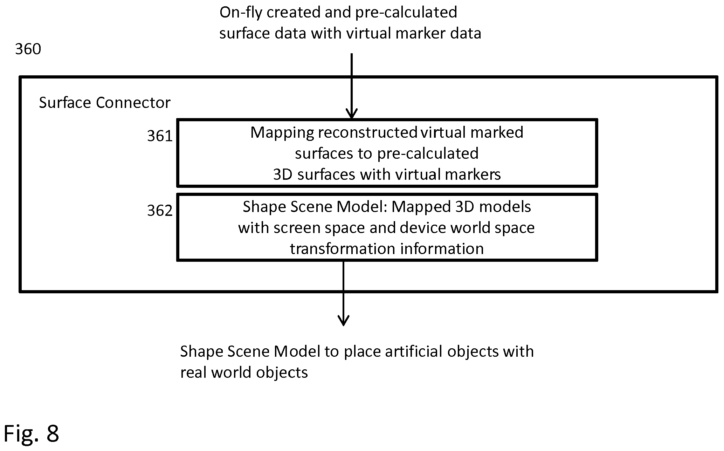

Fig. 8 is a block diagram illustrating a Surface Connector 360 configuration according to an embodiment of the invention. The Surface Connector 360 may comprise a mapping configuration 361 for mapping the locally created virtual marked surfaces from Virtual Marker Surface Creator 340 to corresponding pre-calculated virtual marked surfaces selected from the real world 3D Model Database 330. When mapping the two virtual marked surfaces, location and/or orientation of the virtual markers in the acquired image based on the locally created virtual marked surfaces are mapped or connected with the real world location and/or orientation of the virtual markers in the pre-calculated real world 3D surfaces with virtual markers. The output of the mapping configuration 361 is an application interface or Shape Scene Model 362 holding the mapped surfaces with both image and real world information of virtual marker location and/or orientation. The real world location information combined with the image location information makes it possible to know where window corners, wall corners, etc. are at the acquired image, which again enables placing of artificial objects taking into account the real world data.

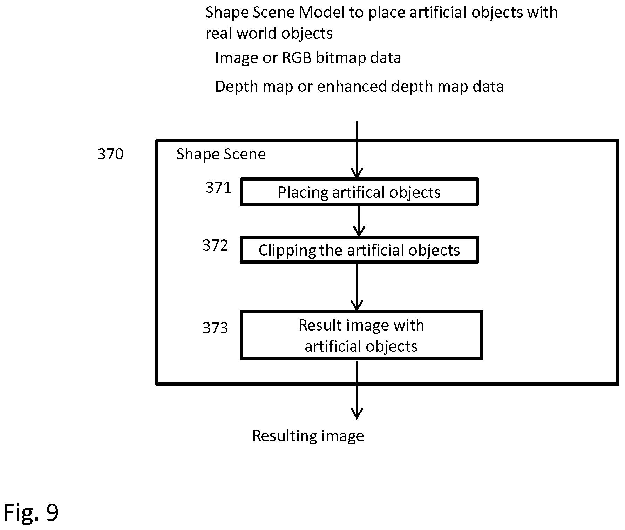

Fig. 9 is a block diagram illustrating a Shape Scene 370 configuration according to an embodiment of the invention. The Shape Scene 370 combines the mapped surfaces holding virtual marker data from the application interface or Shape Scene Model 362 with the acquired image or a RGB bitmap 201 of the image and with a depth map 202 or an enhanced depth map 350, 351. The Shape Scene 370 including real world 3D models surfaces matched to surfaces calculated from the acquired image is used for placing artificial objects in the image taking into account the real world location and/or orientation information of surfaces in the image 371. The information of the pre-calculated real-world surfaces also enables clipping of the artificial objects, if necessary, when placing these in the image 372. The resulting output is an augmented reality representation of the acquired image including one or more natural looking and arranged artificial objects.

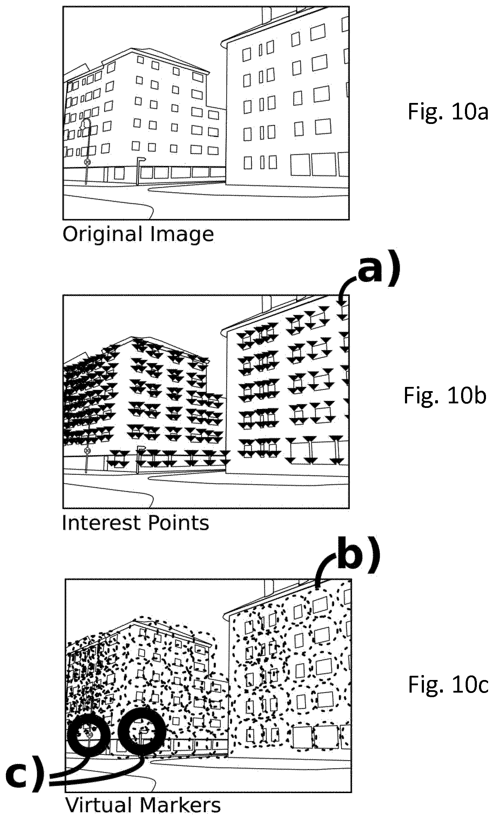

Figs. 10a-10c illustrate creation of virtual markers in an acquired image according to an embodiment. In order to create or insert virtual markers in an image, points or areas of interest may be determined. A point of interest may be a point that can be recognized from an image by some well-defined computational methods. These points of interest may be used again as an input for other computational methods to create virtual markers. A virtual marker may have a location and an orientation in the space represented by the image.

The Virtual Marker Detector 310 may be used for creating the virtual markers in the image. Fig. 10a shows as an example a bitmap representation of the original acquired image, in Fig. 10b the triangles, one of which is labelled a), represent points of interest in the acquired image, and in Fig. 10c, the dotted circles, one of which is labelled b), represent virtual markers formed at areas of interest including one or more of the points of interest, a). In Fig. 10c, the full circles labelled c) show examples of interest points which may be detected more specifically by the apparatus 10 or system of the invention because they are commonly found traffic signs, and matching to computational methods recognizing traffic signs.

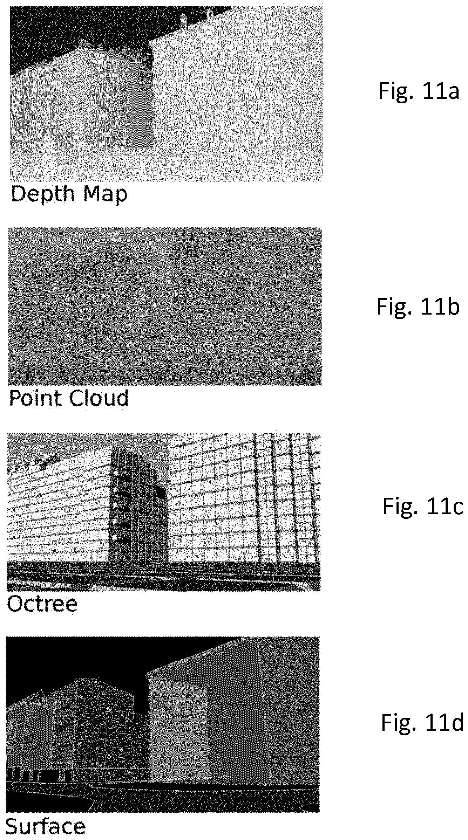

Figs. 11a-11d illustrate determination and reconstruction of surfaces occurring in an acquired image according to an embodiment of the invention. The Surface Reconstructor 320 of Fig. 4 may be used for producing the reconstructed surfaces. Fig. 11a shows a depth map presentation of the image of Fig. 10a, and camera depth map sensors 101 and the depth map configuration 202 may be used to obtain the image of Fig. 11a. The depth map presentation of Fig. 11a may be stored locally within the apparatus 10, and a point cloud database can be produced 321, see Fig. 11b. The point cloud data may be used to create an Octree database 322, see Fig. 11c, where noise from the original images is greatly reduced and strongest point cloud in space create solid forms. This Octree information is then processed to create a surface database 323, see Fig. 11d, which may contain surface shapes from the acquired image being modelled as real life surfaces.

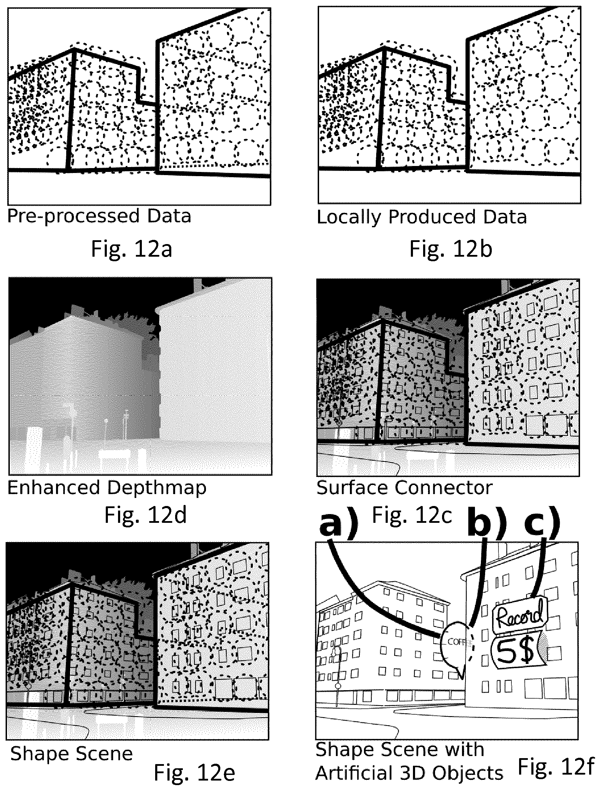

Figs. 12a-12f illustrate derivation of a shape scene and generation of an augmented reality representation of an acquired image according to an embodiment of the invention. The virtual marker image data, see Fig. 10c, and the reconstructed surface image data, see Fig. 11d, are mapped to create a Locally Produced Data, see Fig. 12b, representing locally created virtually marked surfaces. This mapping may be performed by use of the Virtual Marker Surface Creator 340. Fig. 12a is an image showing Pre-processed Data corresponding to the Locally Produced Data of Fig. 12b, where the Pre-processed Data can be obtained from the 3D Model Database 330 or from the external services 400, and a virtually marked pre-calculated 3D model corresponding to the acquired image may be selected based on the geographical position of the apparatus 10, when acquiring the image. The Pre-processed Data, Fig. 12b, obtained from the local database 330 or external services 400 may then be mapped to match the Locally Produced Data, Fig. 12a, by use of the Surface Connector 360, the output of the matching being illustrated in Fig. 12c. Here, matching may include that virtual marker location information of the real world Pre-Processed Data is connected with the virtual markers of the Locally Produced Data. This makes it possible to know where window corners, wall corners, etc. real world information are at the image data represented by the Locally Produced Data.

An Enhanced Depthmap, see Fig. 12d, can be produced by using the Locally Produced Data illustrated in Fig. 12b and the Pre-Processed Data illustrated in Fig. 12a. An enhanced depth map processing may use these two sets of data in addition to depth map data from the acquired image, 202, to create the Enhanced Depthmap. The Enhanced Depthmap obtained this way may be a more accurate presentation from a real world depth map when compared to the image depth map, 202. An enhanced image depth map may also be obtained as described in connection with the Image Depth Enhancer 350.

Fig. 12e illustrates a Shape Scene, which may be created by connecting the Surface Connector data, Fig. 12c, being output from the Surface Connector 360, with the Enchanced Depthmap data of Fig. 12d, or depth map data 202 or enhanced depth map data 350, together with the acquired image data or RGB bitmap data 201. The information comprised by the Shape Scene, Fig. 12e, 370, enables placing artificial objects in the acquired image taking into account the real world surfaces, which may include clipping part of the artificial objects, see Fig. 12f. In Fig. 12f label a) marks a first artificial object set in the middle of the image, and label c) marks a second artificial object set to the right in the image. Label b) in Fig. 12f marks an area that has been detected to be behind a real world object, which in this case is a building existing on the right side of the image. Here, a part of the artificial object a) is clipped because it is behind the real object. By use of the Shape Detector System 300, artificial 3D objects may be placed in an image scene to look for a user as being a natural part of the image.

The apparatus 10 or system described herein could be used to show advertisement for a user in a user interface of an augmented reality application. Artificial 3D advertisement could be naturally part of a camera image or camera video feed shown by the user interface. Artificial 3D advertisement can be placed and rotated in relation to objects found from the image or video stream, like the wall of a building, window glass etc.. Also real-life mimicking ambient light direction, color and fog effects could be placed to make the augmented reality 3D user interface more real. The apparatus 10 or system of the present invention could be part of for example wearable or mobile or other similar computing systems.

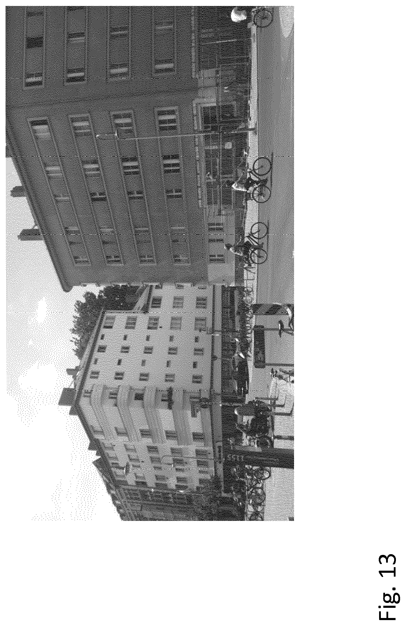

Fig. 13 shows an original acquired image, corresponding to the bitmap presentation of Fig. 10a.

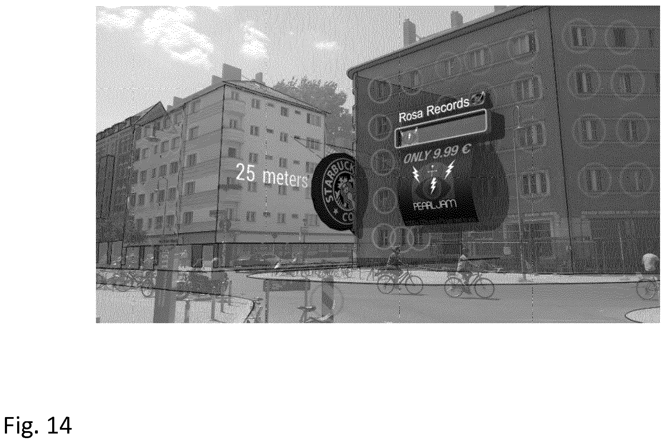

Fig. 14 shows an overlay image of the original image of Fig. 13 with a shape scene with three artificial advertisement objects according to Fig. 12f.

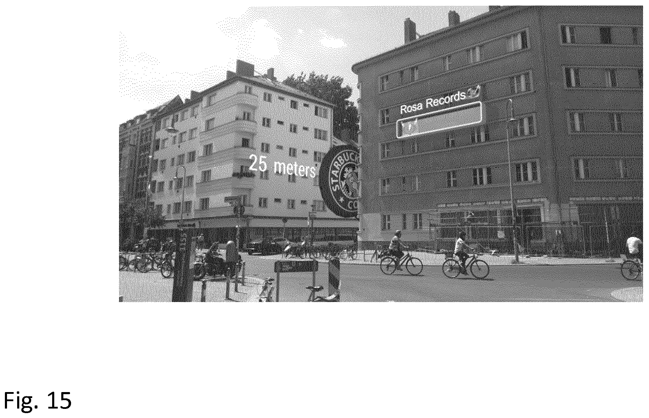

Fig. 15 shows an augmented reality representation of the image of Fig. 13, where the augmented reality representation includes two of the artificial objects of Fig. 14. In Fig. 15 the two artificial advertisement objects have been added to the acquired image using the Shape Detector System 300 of the present invention resulting in a natural looking image. Both artificial 3D objects in Fig. 15 can be seen as an advertisement to the user. The first artificial element in the middle of Fig. 15 has been clipped by the Shape Detector System 300 of the present invention so that the artificial 3D objects looks as a natural part of the image for the user. Advertisements may be personalized according to each user.

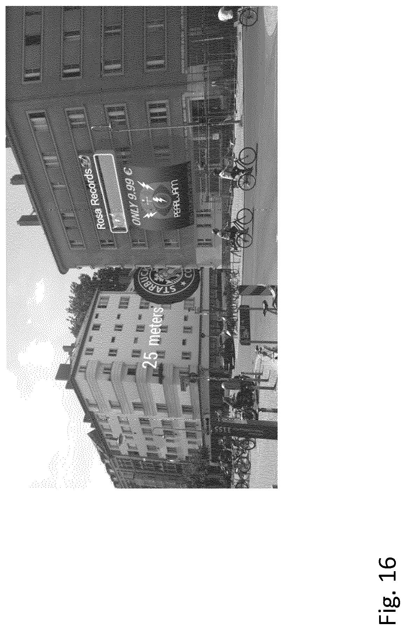

Fig. 16 shows the augmented reality representation of Fig. 15 including a third artificial advertisement object being created according to an embodiment of the invention. In Fig. 16 the second advertisement object ("Rosa Records") to the right of Fig. 15 created a new and third artificial advertisement object ("Only 9.99 €") when a user selected the second advertisement object on the right. Here, the second advertisement worked as an application. User selection could happen for example in the user interface of wearable computing glasses by having the user looking at the artificial object for a while, pointing at the artificial object with a finger or doing some gesture. More complex applications like the ones found from desktop computing devices could be arranged in a similar way.

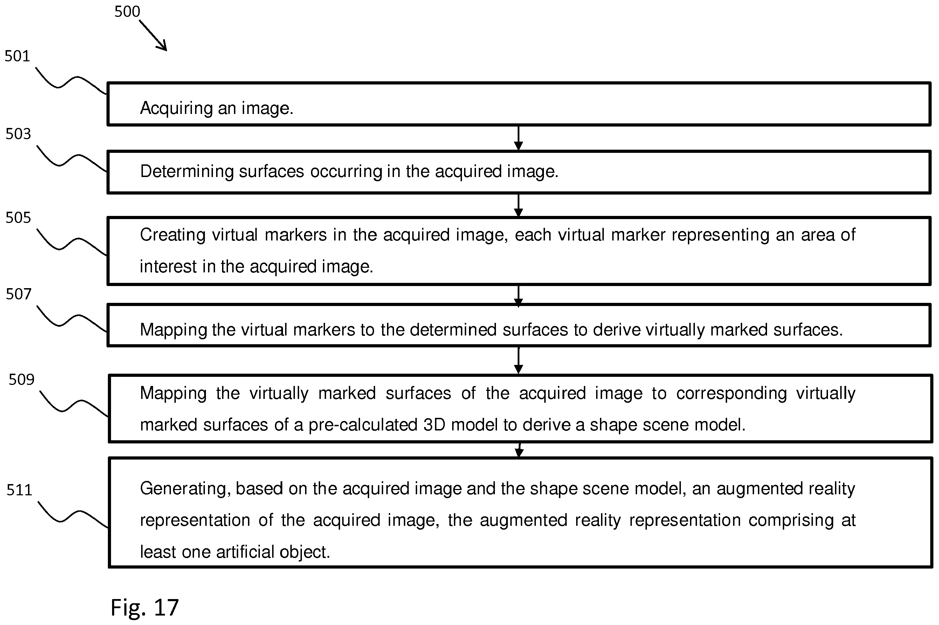

Fig. 17 shows a flow diagram of method 500 for generating an augmented reality representation of an acquired image according to an embodiment of the present invention. The method 500 may be performed by apparatuses according to embodiments of the present invention, such as the apparatus 10. The method comprises acquiring 501 an image, determining 503 surfaces occurring in the acquired image, creating 505 virtual markers in the acquired image, each virtual marker representing an area of interest in the acquired image, mapping 507 the virtual markers to the determined surfaces to derive virtually marked surfaces, mapping 509 the virtually marked surfaces of the acquired image to corresponding virtually marked surfaces of a pre-calculated 3D model 205 to derive a shape scene model 360, 362, and generating 511, based on the acquired image and the shape scene model 360, 362, an augmented reality representation of the acquired image, the augmented reality representation comprising at least one artificial object.

Although the present invention has been described with reference to specific features and embodiments thereof, it is evident that various modifications and embodiments can be made thereto without departing from the scope of the invention. The specification and drawings are, accordingly, to be regarded as an illustration of the invention as defined by the appended claims, and are contemplated to cover any and all modifications, variations, combinations or equivalents that fall within the scope of the present invention.

The term "comprising" as used in the appended claims does not exclude other elements or steps. The term "a" or "an" as used in the appended claims does not exclude a plurality.

## Claims

1. An apparatus comprising:
an image obtaining unit (101) configured to acquire an image;
a display (105) for presenting an image;
an orientation unit (103) configured to obtain orientation and location (204) of the apparatus when acquiring the image;
a processing circuitry (200, 300) configured to:
determine surfaces occurring in the acquired image;
create virtual markers in the acquired image, each virtual marker representing
an area of interest in the acquired image;
associate the virtual markers in the acquired image with the apparatus's orientation and location when acquiring the image;
map the virtual markers to the determined surfaces to derive virtually marked surfaces;
map the virtually marked surfaces of the acquired image to corresponding virtually marked surfaces of a pre-calculated 3D model (205) to derive a shape scene model (360, 362), whereby location and/or orientation of the virtual markers in the virtually marked surfaces of the acquired image are mapped with the real world location and/ or orientation of the virtual markers in the virtually marked surfaces of the pre-calculated 3D model; and
generate, based on the acquired image and the shape scene model (360, 362) an augmented reality representation of the acquired image, the augmented reality representation comprising at least one artificial object.

2. The apparatus of one of the preceding claims, wherein
the apparatus comprises an orientation unit (103) configured to obtain orientation and location (204) of the apparatus when acquiring an image; and
the processing circuitry (200, 300) is configured to generate a depth map (202) of the acquired image and to determine the surfaces in the acquired image based on the depth map (202), and associated with the apparatus's orientation and location (204) when acquiring the image.

3. The apparatus of claim 1 or 2, wherein for the creation of the virtual markers in the acquired image, the processing circuitry (200, 300) is configured to:
recognize affine regions (311) or areas of interest in the acquired image;
track affine regions (312) or areas of interest from multiple images corresponding to the acquired image and being acquired over a time period;
group the tracked affine regions (313) or areas on interest; and
create virtual markers with information of apparatus's location and orientation (204) for the acquired image based on the obtained grouped affine regions.

4. The apparatus of claim 2 or claims 2 and 3, wherein for determination of the surfaces in the acquired image, the processing circuitry (200, 300) is configured to:
create a point cloud (321) for the acquired image based on the acquired image, the depth map (202) and the orientation and location (204) of the apparatus when acquiring the image;
collect point clouds of multiple images corresponding to the acquired image and being acquired over a time period;
process the collected point clouds by use of segmentation (322) to obtain a segmented data structure; and
reconstruct surfaces (323) with information of apparatus's location and orientation based on the segmented data structure.

5. The apparatus of claim 4, wherein the segmentation is an Octree segmentation (322) process, and the segmented data structure is an Octree data structure.

6. The apparatus of one of the preceding claims, wherein
the processing circuitry (200, 300) is configured to generate a depth map (202) of the acquired image; and
to generate the augmented reality representation based on the acquired image, the generated depth map (202), and on the derived shape scene model (360, 362).

7. The apparatus of one of the claims 1-5, wherein the processing circuitry (200, 300) is configured to
generate a depth map (202) of the acquired image;
generate an enhanced depth map for the acquired image based on the generated depth map (202) and the determined surfaces; and
to generate the augmented reality representation based on the acquired image, the generated enhanced depth map, and on the derived shape scene model (360, 362).

8. A method (500) for generating an augmented reality representation of an acquired image, the method comprising:
acquiring (501) an image;
obtaining orientation and location (204) of the apparatus when acquiring the image;
determining (503) surfaces occurring in the acquired image;
creating (505) virtual markers in the acquired image, each virtual marker
representing an area of interest in the acquired image;
associating the virtual markers in the acquired image with the apparatus's orientation and location when acquiring the image;
mapping (507) the virtual markers to the determined surfaces to derive virtually marked surfaces;
mapping (509) the virtually marked surfaces of the acquired image to corresponding virtually marked surfaces of a pre-calculated 3D model (205) to derive a shape scene model (360, 362), whereby location and/or orientation of the virtual markers in the virtually marked surfaces of the acquired image are mapped with the real world location and/or orientation of the virtual markers in the virtually marked surfaces of the pre-calculated 3D model; and
generating (511), based on the acquired image and the shape scene model (360, 362), an augmented reality representation of the acquired image, the augmented reality representation comprising at least one artificial object.

9. A computer program comprising a program code for performing a method according to claim 8, when said computer program runs on a computer.

## Patentansprüche

1. Vorrichtung, umfassend:
eine Bilderlangungseinheit (101), die konfiguriert ist, um ein Bild zu erfassen;
eine Anzeigevorrichtung (105) zum Zeigen eines Bildes;
eine Ausrichtungseinheit (103), die konfiguriert ist, um die Ausrichtung und Position (204) der Vorrichtung beim Erfassen des Bildes zu erhalten;
eine Verarbeitungsschaltung (200, 300), die konfiguriert ist, um:
Oberflächen zu bestimmen, die in dem erfassten Bild vorhanden sind;
virtuelle Markierungen in dem erfassten Bild zu erzeugen, wobei jede virtuelle Markierung einen Bereich von Interesse in dem erfassten Bild darstellt;
die virtuellen Markierungen in dem erfassten Bild der Ausrichtung und Position der Vorrichtung beim Erfassen des Bildes zuzuweisen;
die virtuellen Markierungen den bestimmten Oberflächen zuzuordnen, um virtuell markierte Oberflächen abzuleiten;
die virtuell markierten Oberflächen des erfassten Bildes entsprechenden virtuell markierten Oberflächen eines vorberechneten 3D-Modells (205) zuzuordnen, um ein Formen-Szenen-Modell (360, 362) abzuleiten, wobei die Position und/oder Ausrichtung der virtuellen Markierungen in den virtuell markierten Oberflächen des erfassten Bildes der realen Position und/oder Ausrichtung der virtuellen Markierungen in den virtuell markierten Oberflächen des vorberechneten 3D-Modells zugeordnet werden; und
basierend auf dem erfassten Bild und dem Formen-Szenen-Modell (360, 362) eine Darstellung mit erweiterter Realität des erfassten Bildes zu erzeugen, wobei die Darstellung mit erweiterter Realität mindestens ein künstliches Objekt umfasst.

2. Vorrichtung nach einem der vorhergehenden Ansprüche, wobei
die Vorrichtung eine Ausrichtungseinheit (103) umfasst, die konfiguriert ist, um die Ausrichtung und Position (204) der Vorrichtung beim Erfassen eines Bildes zu erhalten; und
die Verarbeitungsschaltung (200, 300) konfiguriert ist, um eine Tiefenkarte (202) des erfassten Bildes zu erzeugen und die Oberflächen in dem erfassten Bild basierend auf der Tiefenkarte (202) zu bestimmen, und welche der Ausrichtung und Position (204) der Vorrichtung beim Erfassen des Bildes zugewiesen sind.

3. Vorrichtung nach Anspruch 1 oder 2, wobei zur Erzeugung der virtuellen Markierungen in dem erfassten Bild die Verarbeitungsschaltung (200, 300) konfiguriert ist, um:
affine Regionen (311) oder Bereiche von Interesse in dem erfassten Bild zu erkennen;
affine Regionen (312) oder Bereiche von Interesse aus mehreren Bildern, die dem erfassten Bild entsprechen und über einen Zeitraum erfasst werden, zu verfolgen;
die verfolgten affinen Regionen (313) oder Bereiche von Interesse zu gruppieren; und
virtuelle Markierungen mit Informationen zur Position und Ausrichtung (204) der Vorrichtung für das erfasste Bild basierend auf den erhaltenen gruppierten affinen Regionen zu erzeugen.

4. Vorrichtung nach Anspruch 2 oder nach Anspruch 2 und 3, wobei zur Bestimmung der Oberflächen in dem erfassten Bild die Verarbeitungsschaltung (200, 300) konfiguriert ist, um:
eine Punktwolke (321) für das erfasste Bild basierend auf dem erfassten Bild, der Tiefenkarte (202) und der Ausrichtung und Position (204) der Vorrichtung beim Erfassen des Bildes zu erzeugen;
Punktwolken mehrerer Bilder, die dem erfassten Bild entsprechen und über einen Zeitraum erfasst werden, zu sammeln;
die gesammelten Punktwolken unter Verwendung von Segmentierung (322) zu verarbeiten, um eine segmentierte Datenstruktur zu erhalten; und
Oberflächen (323) mit Informationen über die Position und Ausrichtung der Vorrichtung basierend auf der segmentierten Datenstruktur zu rekonstruieren.

5. Vorrichtung nach Anspruch 4, wobei die Segmentierung ein Prozess einer Octree-Segmentierung (322) ist und die segmentierte Datenstruktur eine Octree-Datenstruktur ist.

6. Vorrichtung nach einem der vorhergehenden Ansprüche, wobei
die Verarbeitungsschaltung (200, 300) konfiguriert ist, um eine Tiefenkarte (202) des erfassten Bildes zu erzeugen; und
die Darstellung mit erweiterter Realität basierend auf dem erfassten Bild, der erzeugten Tiefenkarte (202) und dem abgeleiteten Formen-Szenen-Modell (360, 362) zu erzeugen.

7. Vorrichtung nach einem der Ansprüche 1 bis 5, wobei die Verarbeitungsschaltung (200, 300) konfiguriert ist, um
eine Tiefenkarte (202) des erfassten Bildes zu erzeugen;
eine erweiterte Tiefenkarte für das erfasste Bild basierend auf der erzeugten Tiefenkarte (202) und den bestimmten Oberflächen zu erzeugen; und
die Darstellung mit erweiterter Realität basierend auf dem erfassten Bild, der erzeugten erweiterten Tiefenkarte und dem abgeleiteten Formen-Szenen-Modell (360, 362) zu erzeugen.

8. Verfahren (500) zur Erzeugung einer Darstellung mit erweiterter Realität eines erfassten Bildes, das Verfahren umfassend:
Erfassen (501) eines Bildes;
Erhalten der Ausrichtung und Position (204) der Vorrichtung beim Erfassen des Bildes;
Bestimmen (503) von Oberflächen, die in dem erfassten Bild vorhanden sind;
Erzeugen (505) virtueller Markierungen in dem erfassten Bild, wobei jede virtuelle Markierung einen Bereich von Interesse in dem erfassten Bild darstellt;
Zuweisen der virtuellen Markierungen in dem erfassten Bild zu der Ausrichtung und Position der Vorrichtung beim Erfassen des Bildes;
Zuordnen (507) der virtuellen Markierungen zu den bestimmten Oberflächen, um virtuell markierte Oberflächen abzuleiten;
Zuordnen (509) der virtuell markierten Oberflächen des erfassten Bildes zu den entsprechenden virtuell markierten Oberflächen eines vorberechneten 3D-Modells (205), um ein Formen-Szenen-Modell (360, 362) abzuleiten, wobei die Position und/oder Ausrichtung der virtuellen Markierungen in den virtuell markierten Oberflächen des erfassten Bildes der realen Position und/oder Ausrichtung der virtuellen Markierungen in den virtuell markierten Oberflächen des vorberechneten 3D-Modells zugeordnet werden; und
Erzeugen (511), basierend auf dem erfassten Bild und dem Formen-Szenen-Modell (360, 362), einer Darstellung mit erweiterter Realität des erfassten Bildes, wobei die Darstellung mit erweiterter Realität mindestens ein künstliches Objekt umfasst.

9. Computerprogramm, umfassend einen Programmcode zum Durchführen eines Verfahrens nach Anspruch 8, wenn das Computerprogramm auf einem Computer ausgeführt wird.

## Revendications

1. Appareil comprenant :
une unité d'obtention d'image (101) configurée pour acquérir une image ;
un dispositif d'affichage (105) pour présenter une image ;
une unité d'orientation (103) configurée pour obtenir l'orientation et l'emplacement (204) de l'appareil lors de l'acquisition de l'image ;
un circuit de traitement (200, 300) configuré pour :
déterminer les surfaces se produisant dans l'image acquise ;
créer des marqueurs virtuels dans l'image acquise, chaque marqueur virtuel représentant une zone d'intérêt dans l'image acquise ;
associer les marqueurs virtuels dans l'image acquise à l'orientation et à l'emplacement de l'appareil lors de l'acquisition de l'image ;
mettre en correspondance les marqueurs virtuels aux surfaces déterminées pour dériver des surfaces marquées virtuellement ;
mettre en correspondance les surfaces marquées virtuellement de l'image acquise aux surfaces marquées virtuellement correspondantes d'un modèle 3D précalculé (205) pour dériver un modèle de scène de forme (360, 362), de sorte que l'emplacement et/ou l'orientation des marqueurs virtuels dans les surfaces marquées virtuellement de l'image acquise sont mis en correspondance avec l'emplacement et/ou l'orientation dans le monde réel des marqueurs virtuels dans les surfaces marquées virtuellement du modèle 3D précalculé ; et
générer, sur la base de l'image acquise et du modèle de scène de forme (360, 362), une représentation en réalité augmentée de l'image acquise, la représentation en réalité augmentée comprenant au moins un objet artificiel.

2. Appareil selon l'une des revendications précédentes,
l'appareil comprenant une unité d'orientation (103) configurée pour obtenir l'orientation et l'emplacement (204) de l'appareil lors de l'acquisition d'une image ; et
le circuit de traitement (200, 300) étant configuré pour générer une carte de profondeur (202) de l'image acquise et pour déterminer les surfaces dans l'image acquise sur la base de la carte de profondeur (202), et associé à l'orientation et à l'emplacement de l'appareil (204) lors de l'acquisition de l'image.

3. Appareil selon la revendication 1 ou 2, pour la création des marqueurs virtuels dans l'image acquise, le circuit de traitement (200, 300) étant configuré pour :
reconnaître des régions affines (311) ou des zones d'intérêt dans l'image acquise ;
suivre des régions affines (312) ou des zones d'intérêt à partir de plusieurs images correspondant à l'image acquise, et acquises sur une période de temps ;
regrouper les régions affines (313) ou les zones d'intérêt suivies ; et
créer des marqueurs virtuels avec des informations sur l'emplacement et l'orientation de l'appareil (204) pour l'image acquise sur la base des régions affines groupées obtenues.

4. Appareil selon la revendication 2 ou selon les revendications 2 et 3, pour la détermination des surfaces dans l'image acquise, le circuit de traitement (200, 300) étant configuré pour :
créer un nuage de points (321) pour l'image acquise sur la base de l'image acquise, de la carte de profondeur (202) et de l'orientation et de l'emplacement (204) de l'appareil lors de l'acquisition de l'image ;
collecter des nuages de points de plusieurs images correspondant à l'image acquise, et acquises sur une période de temps ;
traiter les nuages de points collectés en utilisant la segmentation (322) pour obtenir une structure de données segmentée ; et
reconstruire des surfaces (323) avec des informations sur l'emplacement et l'orientation de l'appareil sur la base de la structure de données segmentée.

5. Appareil selon la revendication 4, la segmentation étant un processus de segmentation octree (322), et la structure de données segmentées étant une structure de données octree.

6. Appareil selon l'une des revendications précédentes,
le circuit de traitement (200, 300) étant configuré pour générer une carte de profondeur (202) de l'image acquise ; et
pour générer la représentation en réalité augmentée sur la base de l'image acquise, de la carte de profondeur générée (202) et du modèle de scène de forme dérivé (360, 362).

7. Appareil selon l'une des revendications 1 à 5, le circuit de traitement (200, 300) étant configuré pour
générer une carte de profondeur (202) de l'image acquise ;
générer une carte de profondeur améliorée pour l'image acquise sur la base de la carte de profondeur générée (202) et des surfaces déterminées ; et
pour générer la représentation en réalité augmentée sur la base de l'image acquise, de la carte de profondeur augmentée générée et du modèle de scène de forme dérivé (360, 362).

8. Procédé (500) pour générer une représentation en réalité augmentée d'une image acquise, le procédé comprenant :
l'acquisition (501) d'une image ;
l'obtention de l'orientation et de l'emplacement (204) de l'appareil lors de l'acquisition de l'image ;
la détermination (503) des surfaces se produisant dans l'image acquise ;
la création (505) de marqueurs virtuels dans l'image acquise, chaque marqueur virtuel représentant une zone d'intérêt dans l'image acquise ;
l'association des marqueurs virtuels de l'image acquise à l'orientation et à l'emplacement de l'appareil lors de l'acquisition de l'image ;
la mise en correspondance (507) des marqueurs virtuels avec les surfaces déterminées pour dériver des surfaces marquées virtuellement ;
la mise en correspondance (509) des surfaces marquées virtuellement de l'image acquise avec les surfaces marquées virtuellement correspondantes d'un modèle 3D précalculé (205) pour dériver un modèle de scène de formel (360, 362), l'emplacement et/ou l'orientation des marqueurs virtuels dans les surfaces marquées virtuellement de l'image acquise étant ainsi mis en correspondance avec l'emplacement et/ou l'orientation dans le monde réel des marqueurs virtuels dans les surfaces marquées virtuellement du modèle 3D précalculé ; et
la génération (511), sur la base de l'image acquise et du modèle de scène de forme (360, 362), d'une représentation en réalité augmentée de l'image acquise, la représentation en réalité augmentée comprenant au moins un objet artificiel.

9. Programme informatique comprenant un code de programme pour réaliser un procédé selon la revendication 8, lorsque ledit programme informatique s'exécute sur un ordinateur.
